# EUROPEAN PATENT APPLICATION

(11) **EP 4 625 567 A2**
(43) Date of publication of application: **01.10.2025**
(21) Application number: 25164288.0
(22) Date of filing: 18.03.2025
(51) Int. Cl.: H01M 10/04, H01M 10/0525, H01M 50/105

(54) **SECONDARY BATTERY AND ELECTRONIC APPARATUS**

(30) Priority: 28.03.2024 CN 202410370211
(71) Applicant: Ningde Amperex Technology Ltd., Ningde City, Fujian Province 352100 (CN)
(72) Inventor: LI, Sheng, Ningde City, Fujian Province 352100 (CN); LI, Huimian, Ningde City, Fujian Province 352100 (CN); YIN, Shaokun, Ningde City, Fujian Province 352100 (CN)
(74) Representative: Icosa

(57) **Abstract**

A secondary battery (100a) and an electronic apparatus (200) are provided. The secondary battery (100a) includes an electrode assembly (10), a packaging bag (20), and a first bonding member (50). The electrode assembly (10) includes a positive electrode plate (11), a separator (12), and a negative electrode plate (13) that are arranged in a winding manner. An end portion (111, 1121) of the positive electrode plate (11) and an end portion of the separator (12) extend beyond an end portion of the negative electrode plate (13), and a first uncoated foil zone (112) is provided at a portion at which the positive electrode plate (11) extends beyond the negative electrode plate (13). An outermost circle of a first straight segment (10a) includes one layer of a first uncoated foil zone (112). An inner circle of the first straight segment (10a) includes the positive electrode plate (11) close to the first uncoated foil zone (112) and at least one layer of the separator (12) located between the first uncoated foil zone (112) and the positive electrode plate (11). An end portion of the first uncoated foil zone (112) is located in a second straight segment (10c). The electrode assembly (10) is accommodated in the packaging bag (20). The first bonding member (50) includes a first bonding surface (51) and a second bonding surface (52) that are arranged opposite each other along a first direction (X), where the first bonding surface (51) is bonded to the second straight segment (10c) and covers at least part of the end portion of the first uncoated foil zone (112), and the second bonding surface (52) is bonded to the packaging bag (20). The secondary battery (100a) is advantageous in improving drop performance.

## Description

### TECHNICAL FIELD

This application relates to the field of energy storage technologies, and in particular, to a secondary battery and an electronic apparatus.

### BACKGROUND

When a secondary battery is dropped, the impact force generated by the electrolyte in the packaging bag on the electrode assembly and the relative sliding between the outer side of the electrode assembly and the inner surface of the packaging bag can easily cause the separator in the outermost circle of the electrode assembly to shrink. The positive electrode plate and the negative electrode plate at the shrinkage of the separator can short-circuit, affecting the drop performance of the secondary battery.

### SUMMARY

In view of the foregoing situation, this application provides a secondary battery, which is advantageous in improving drop performance.

An embodiment of this application provides a secondary battery, where the secondary battery includes an electrode assembly, a packaging bag, a positive electrode tab, a negative electrode tab, and a first bonding member. The electrode assembly includes a positive electrode plate, a separator, and a negative electrode plate that are arranged in a winding manner. The electrode assembly includes a first straight segment, a first bent segment, a second straight segment, and a second bent segment that are connected in sequence, where the first straight segment and the second straight segment are arranged opposite each other along a first direction, and the first bent segment and the second bent segment are arranged opposite each other along a second direction. The first direction is a thickness direction of the secondary battery, and the second direction is perpendicular to the first direction. An end portion of the positive electrode plate and an end portion of the separator extend beyond an end portion of the negative electrode plate, and a first uncoated foil zone is provided at a portion at which the positive electrode plate extends beyond the negative electrode plate. An outermost circle of a first straight segment includes one layer of a first uncoated foil zone. An inner circle of the first straight segment includes the positive electrode plate close to the first uncoated foil zone in the first direction and at least one layer of the separator located between the first uncoated foil zone and the positive electrode plate. An end portion of the first uncoated foil zone is located in the second straight segment. The electrode assembly is accommodated in the packaging bag. The first bonding member includes a first bonding surface and a second bonding surface that are arranged opposite each other along the first direction, where the first bonding surface is bonded to the second straight segment and covers at least part of the end portion of the first uncoated foil zone, and the second bonding surface is bonded to the packaging bag.

In the secondary battery, the outermost circle of the first straight segment includes one layer of the first uncoated foil zone; and the inner circle of the first straight segment includes the positive electrode plate close to the first uncoated foil zone in the first direction, and the inner circle of the first straight segment further includes at least one layer of the separator located between the first uncoated foil zone and the positive electrode plate. Two sides of the separator are the first uncoated foil zone and the positive electrode plate. When the separator shrinks under an impact force, the first uncoated foil zone and the positive electrode plate on the two sides of the shrinkage of the separator have the same polarity, which reduces the risk of short-circuiting at the shrinkage of the separator and improves the drop performance of the secondary battery. The first bonding surface is bonded to the second straight segment and covers at least part of the end portion of the first uncoated foil zone, to secure the position of the positive electrode plate, which reduces the risk of the electrode assembly becoming loose and collapsing. The second bonding surface is bonded to the packaging bag to secure the position of the electrode assembly in the packaging bag, which helps to limit the relative sliding between the electrode assembly and the packaging bag. On the one hand, it can reduce the risk of the separator shrinking under the impact force. On the other hand, it can reduce the risk of the packaging bag being damaged due to the movement of the electrode assembly inside the packaging bag, thereby improving the drop performance of the secondary battery.

In some embodiments of this application, the secondary battery further includes the positive electrode tab and the negative electrode tab that are located at the first straight segment, where the positive electrode tab is connected to the positive electrode plate and extends out of the packaging bag, and the negative electrode tab is connected to the negative electrode plate and extends out of the packaging bag. The positive electrode tab and the negative electrode tab are located at the first straight segment, allowing the first straight segment to fit with a shallow pit surface of the packaging bag and the second straight segment to fit with a deep pit surface of the packaging bag. Specifically, the packaging bag includes a first connecting surface and a second connecting surface that are arranged opposite each other along the first direction, where the first connecting surface corresponds to the first straight segment, and the second connecting surface corresponds to the second straight segment. A surface of the first connecting surface facing away from the first straight segment is used to connect with an external battery compartment. When the secondary battery is dropped, the first connecting surface experiences a greater impact force compared to the second connecting surface. On the one hand, a region in which the separator is prone to shrinkage is located in the outermost circle of the first straight segment, which helps to reduce the risk of short-circuiting at the shrinkage of the separator and improves the drop performance of the secondary battery. On the other hand, it helps to reduce the impact force on the end portion of the positive electrode plate, lowers the risk of tearing at the end portion of the positive electrode plate, and improves the drop performance of the secondary battery.

In some embodiments of this application, the inner circle of the first straight segment includes two layers of separators located between the first uncoated foil zone and the positive electrode plate, and the two layers of separators are used to improve the impact resistance of the first straight segment.

In some embodiments of this application, the first bonding surface further covers at least part of the end portion of the separator to confine the separator in the winding direction, which reduces the risk of the separator shrinking under the impact force.

In some embodiments of this application, the separator is adhesive, and two surfaces of the separator are bonded to the positive electrode plate and the negative electrode plate, respectively. Peel strength between the separator and the positive electrode plate is 2 N/m to 12 N/m, which reduces the risk of tearing at the portion of which the electrode assembly is bonded to the first bonding surface and the risk of lithium plating in the electrode assembly, and can also increase the energy density of the secondary battery. Peel strength between the separator and the negative electrode plate is 2 N/m to 12 N/m, which enhances the structural stability of the electrode assembly, increases the energy density of the secondary battery, and can also reduce the risk of lithium plating in the electrode assembly.

In some embodiments of this application, the peel strength between the separator and the positive electrode plate is 3 N/m to 12 N/m, which further reduces the risk of tearing at the portion of which the electrode assembly is bonded to the first bonding surface and the risk of lithium plating in the electrode assembly, and can also further increase the energy density of the secondary battery. The peel strength between the separator and the negative electrode plate is 8 N/m to 12 N/m, which further enhances the structural stability of the electrode assembly, increases the energy density of the secondary battery, and can also further reduce the risk of lithium plating in the electrode assembly.

In some embodiments of this application, the first uncoated foil zone further includes an end segment located in the second straight segment, where the end segment is an end portion of the first uncoated foil zone in a winding direction of the electrode assembly, the first bonding surface and the end segment have a first overlapping portion, and a length H1 of the first overlapping portion in the winding direction of the electrode assembly meets the following relation: 1 mm ≤ H1 ≤ 5 mm. This enhances the connection strength between the first bonding surface and the first uncoated foil zone, thereby strengthening the binding force of the packaging bag on the electrode assembly and reducing the space occupied by the first bonding member to increase the energy density of the secondary battery.

In some embodiments of this application, 2 mm ≤ H1 ≤ 4 mm, which further enhances the connection strength between the first bonding surface and the end segment, thereby strengthening the binding force of the packaging bag on the electrode assembly and further reducing the space occupied by the first bonding member to increase the energy density of the secondary battery.

In some embodiments of this application, an area S1 of the first overlapping portion and an area S2 of the first bonding surface meet the following relation: 1% ≤ S 1/S2 ≤ 10%, which enhances the connection strength between the first bonding surface and the end segment, thereby strengthening the binding force of the packaging bag on the electrode assembly and reducing the risk of the electrode assembly becoming loose and collapsing, and which also allows the impact force generated by the first bonding member to concentrate on the positive electrode plate located in the second straight segment when the secondary battery is dropped, and reduces the impact force on the end segment, thereby reducing the risk of tearing in the first uncoated foil zone and improving the drop performance of the secondary battery.

In some embodiments of this application, 5% ≤ S1/S2 ≤ 10%, which further enhances the connection strength between the first bonding surface and the end segment, thereby strengthening the binding force of the packaging bag on the electrode assembly and further reducing the risk of the electrode assembly becoming loose and collapsing, and which further reduces the risk of tearing in the first uncoated foil zone, improving the drop performance of the secondary battery.

In some embodiments of this application, the secondary battery further includes a second bonding member. The second bonding member includes a third bonding surface and a fourth bonding surface that are arranged opposite each other along the first direction, where the third bonding surface is bonded to the second straight segment, and the fourth bonding surface is bonded to the packaging bag, which reduces the risk of the packaging bag being damaged due to the movement of the electrode assembly inside the packaging bag when the secondary battery is dropped, thereby improving the drop performance of the secondary battery. The first bonding member and the second bonding member are spaced apart from each other along the second direction to distribute the impact force on two sides of the second straight segment when the secondary battery is dropped, which reduces the risk of tearing caused by stress concentration points in the second straight segment, thereby improving the drop performance of the secondary battery.

In some embodiments of this application, as viewed along the first direction, a centerline of the second straight segment in the second direction is a first centerline. The first bonding member and the second bonding member are symmetrically arranged with respect to the first centerline, which ensures even force distribution on the first bonding member and the second bonding member when the secondary battery is dropped, and further reduces the risk of tearing caused by stress concentration points in the second straight segment, thereby improving the drop performance of the secondary battery.

In some embodiments of this application, as viewed along the first direction, the second straight segment includes a first edge and a second edge arranged opposite each other in a third direction. The first direction, the second direction, and the third direction are perpendicular to each other. Along the third direction, a distance W1 from one end of the first bonding member close to the first edge to the first edge and a distance W2 from another end of the first bonding member close to the second edge to the second edge meet the following relation: W1 = W2, which ensures even force distribution on the first edge and the second edge when the secondary battery is dropped, and reduces the risk of tearing caused by stress concentration points in the first edge or the second edge, thereby improving the drop performance of the secondary battery.

In some embodiments of this application, the electrode assembly further includes a first end face and a second end face, where the first end face and the second end face are located on two sides of the first straight segment, the first bent segment, the second straight segment, and the second bent segment in the third direction. The first direction, the second direction, and the third direction are perpendicular to each other. The positive electrode tab and the negative electrode tab extend from the first end face.

In some embodiments of this application, as viewed along the first direction, a length L1 of the electrode assembly in the third direction and a width L2 of the electrode assembly in the second direction meet the following relation: L1/L2 ≥ 1, which facilitates the narrowing of the width of the second straight segment, decreases the area of the separator exposed from the first end face and the second end face, and reduce the risk of the separator shrinking. Moreover, it also facilitates the narrowing of the width of the first bonding member and/or the second bonding member, and reduces the risk of bubbles formed due to the larger width of the first bonding member and/or the second bonding member.

In some embodiments of this application, the secondary battery further includes a first adhesive layer, where the first adhesive layer is bonded to the first end face and extends from the first end face to the first straight segment and the second straight segment. The first adhesive layer is configured to enhance the structural stability of the electrode assembly, and the first adhesive layer is connected to the edge of the separator located at the first end face, which reduces the risk of the separator shrinking and improves the drop performance of the secondary battery.

In some embodiments of this application, the secondary battery further includes a second adhesive layer, where the second adhesive layer is bonded to the second end face and extends from the second end face to the first straight segment and the second straight segment. The second adhesive layer is configured to enhance the structural stability of the electrode assembly, and the second adhesive layer is connected to the edge of the separator located at the second end face, which reduces the risk of the separator shrinking and improves the drop performance of the secondary battery.

In some embodiments of this application, the second adhesive layer and the second end face have a second overlapping portion, where an area S3 of the second overlapping portion and an area S4 of the second end face meet the following relation: 50% ≤ S3/S4 ≤ 95%, which further enhances the structural stability of the electrode assembly and further reduces the risk of the separator shrinking, thereby improving the drop performance of the secondary battery.

An embodiment of this application further provides an electronic apparatus, where the electronic apparatus further includes any of the secondary batteries in the foregoing embodiments. The secondary battery is arranged in a battery compartment, and a third bonding member is bonded to the battery compartment and at a region of the packaging bag that corresponds to the first straight segment. Along the first direction, the first straight segment is closer to the third bonding member than the second straight segment.

In the foregoing electronic apparatus, when the secondary battery is dropped, the region of the packaging bag that corresponds to the first straight segment experiences a greater impact force compared to the region of the packaging bag that corresponds to the second straight segment. On the one hand, the area in which the separator is prone to shrinkage is located in the outermost circle of the first straight segment, which reduces the risk of short-circuiting at the shrinkage of the separator and improves the drop performance of the secondary battery. On the other hand, it helps to reduce the impact force on the end portion of the positive electrode plate, lowers the risk of tearing at the end portion of the positive electrode plate, and improves the drop performance of the secondary battery.

### BRIEF DESCRIPTION OF DRAWINGS

FIG. 1 is a schematic structural diagram of a secondary battery according to an embodiment of this application as viewed along a third direction.
FIG. 2 is a schematic structural diagram of an electrode assembly in a secondary battery according to an embodiment of this application as viewed along a first direction.
FIG. 3 is a schematic structural diagram of a second bonding member in a secondary battery according to an embodiment of this application as viewed along a third direction.
FIG. 4 is a schematic structural diagram of a second bonding member in a secondary battery according to an embodiment of this application as viewed along a first direction.
FIG. 5 is a schematic structural diagram of a first bonding member in a secondary battery according to another embodiment of this application as viewed along a first direction.
FIG. 6 is a schematic structural diagram of a first adhesive layer and a second adhesive layer in a secondary battery according to an embodiment of this application as viewed along a first direction.
FIG. 7 is a schematic structural diagram of an electronic apparatus according to an embodiment of this application as viewed along a third direction.
FIG. 8 is a schematic structural diagram of an electronic apparatus according to another embodiment of this application as viewed along a third direction.

**Reference signs of main components:**

| | |
|---|---|
| secondary battery | 100a |
| electronic apparatus | 200 |
| electrode assembly | 10 |
| first straight segment | 10a |
| first bent segment | 10b |
| second straight segment | 10c |
| second bent segment | 10d |
| first centerline | A |
| first edge | 101 |
| second edge | 102 |
| first end face | 10e |
| second end face | 10f |
| positive electrode plate | 11 |
| end portion | 111, 1121 |
| first uncoated foil zone | 112 |
| end segment | 1122 |
| separator | 12 |
| end portion | 121 |
| negative electrode plate | 13 |
| end portion | 131 |
| packaging bag | 20 |
| first connecting surface | 21 |
| second connecting surface | 22 |
| positive electrode tab | 30 |
| negative electrode tab | 40 |
| first bonding member | 50 |
| first bonding surface | 51 |
| first overlapping portion | 511 |
| second bonding surface | 52 |
| second bonding member | 60 |
| third bonding surface | 61 |
| fourth bonding surface | 62 |
| first adhesive layer | 71 |
| second adhesive layer | 72 |
| battery compartment | 91 |
| third bonding member | 92 |
| first direction | X |
| second direction | Y |
| third direction | Z |

This application will be further described with reference to the accompanying drawings in the following specific embodiments.

### DETAILED DESCRIPTION

The following describes the technical solutions in some embodiments of this application with reference to the accompanying drawings in these embodiments of this application. Apparently, the described embodiments are only some rather than all of the embodiments of this application.

It should be noted that when one component is assumed as being "connected to" another component, it may be connected to the another component directly or with a component possibly present therebetween. When a component is deemed as being "disposed" on another component, it may be directly disposed on the another component, or there may be a component disposed in between.

When a value is considered "equal" to another value, it means that the two are equal within a set deviation, with a range of the set deviation being within 5%. In other words, when at least one of the two values fluctuates within the range of the set deviation, even if their values are not exactly the same, they are still considered approximately equal. When a value is considered to have a ratio of "1:1" with another value, it means that the two are equal within a set deviation, with a range of the set deviation being within 5%. In other words, when at least one of the two values fluctuates within the range of the set deviation, even if their values are not exactly the same, their ratio is still considered equal.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "and/or" used herein includes any and all combinations of one or more associated items listed. The term "overlapping" used herein means that the projections of two components partially overlap or the projections of the two components coincide.

An embodiment of this application provides a secondary battery, where the secondary battery includes an electrode assembly, a packaging bag, a positive electrode tab, a negative electrode tab, and a first bonding member. The electrode assembly includes a positive electrode plate, a separator, and a negative electrode plate that are arranged in a winding manner. The electrode assembly includes a first straight segment, a first bent segment, a second straight segment, and a second bent segment that are connected in sequence, where the first straight segment and the second straight segment are arranged opposite each other along a first direction, and the first bent segment and the second bent segment are arranged opposite each other along a second direction. The first direction is a thickness direction of the secondary battery, and the second direction is perpendicular to the first direction. An end portion of the positive electrode plate and an end portion of the separator extend beyond an end portion of the negative electrode plate, and a first uncoated foil zone is provided at a portion at which the positive electrode plate extends beyond the negative electrode plate. An outermost circle of a first straight segment includes one layer of a first uncoated foil zone. An inner circle of the first straight segment includes the positive electrode plate close to the first uncoated foil zone in the first direction and at least one layer of the separator located between the first uncoated foil zone and the positive electrode plate. An end portion of the first uncoated foil zone is located in the second straight segment. The electrode assembly is accommodated in the packaging bag. The first bonding member includes a first bonding surface and a second bonding surface that are arranged opposite each other along the first direction, where the first bonding surface is bonded to the second straight segment and covers at least part of the end portion of the first uncoated foil zone, and the second bonding surface is bonded to the packaging bag.

In the secondary battery, the outermost circle of the first straight segment includes one layer of the first uncoated foil zone; and the inner circle of the first straight segment includes the positive electrode plate close to the first uncoated foil zone in the first direction, and the inner circle of the first straight segment further includes at least one layer of the separator located between the first uncoated foil zone and the positive electrode plate. Two sides of the separator are the first uncoated foil zone and the positive electrode plate. When the separator shrinks under an impact force, the first uncoated foil zone and the positive electrode plate on the two sides of the shrinkage of the separator have the same polarity, which reduces the risk of short-circuiting at the shrinkage of the separator and improves the drop performance of the secondary battery. The first bonding surface is bonded to the second straight segment and covers at least part of the end portion of the first uncoated foil zone, to secure the position of the positive electrode plate, which reduces the risk of the electrode assembly becoming loose and collapsing. The second bonding surface is bonded to the packaging bag to secure the position of the electrode assembly in the packaging bag, which helps to limit the relative sliding between the electrode assembly and the packaging bag. On the one hand, it can reduce the risk of the separator shrinking under the impact force. On the other hand, it can reduce the risk of the packaging bag being damaged due to the movement of the electrode assembly inside the packaging bag, thereby improving the drop performance of the secondary battery.

The following further describes some embodiments of this application with reference to the accompanying drawings.

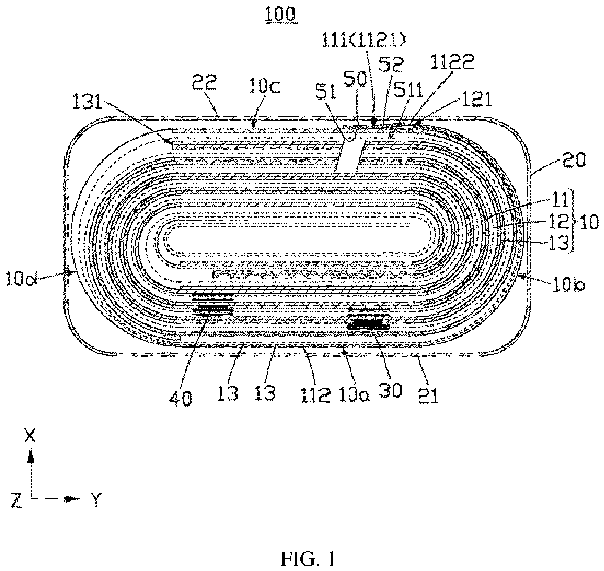

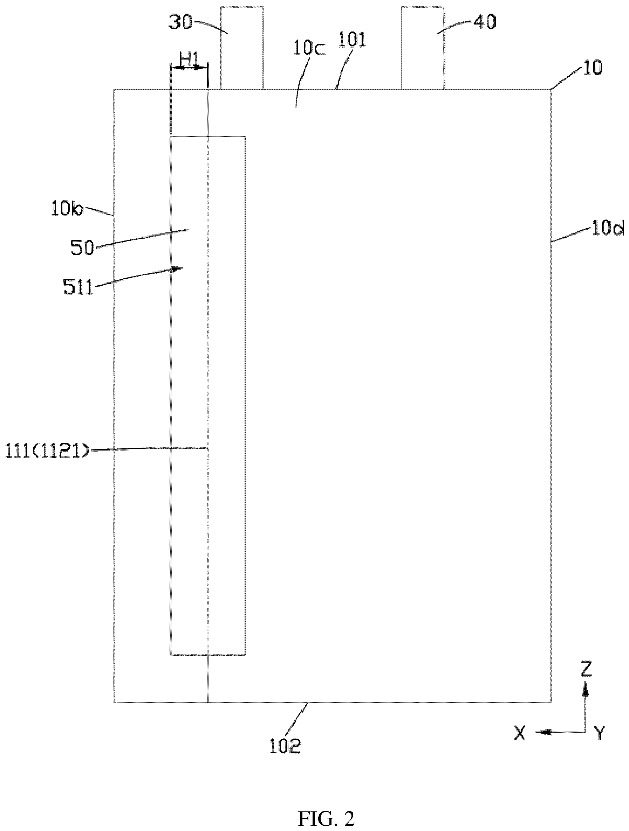

Referring to FIG. 1 and FIG. 2, an embodiment of this application provides a secondary battery 100, where the secondary battery 100 can be recharged to activate an active substance for continued use after discharge. The secondary battery 100 includes an electrode assembly 10, a packaging bag 20, and a first bonding member 50.

The electrode assembly 10 is configured to convert chemical energy into electrical energy. The electrode assembly 10 includes a positive electrode plate 11, a separator 12, and a negative electrode plate 13 that are arranged in a winding manner. A current collector of the positive electrode plate 11 is aluminum foil, and a current collector of the negative electrode plate 13 is copper foil.

The electrode assembly 10 includes a first straight segment 10a, a first bent segment 10b, a second straight segment 10c, and a second bent segment 10d that are connected in sequence. The first straight segment 10a and the second straight segment 10c are arranged opposite each other along a first direction X, and the first direction X is a thickness direction of the secondary battery 100. The first bent segment 10b and the second bent segment 10d are arranged opposite each other along a second direction Y, and the second direction Y is perpendicular to the first direction X. Optionally, the second direction Y is a width direction of the secondary battery 100.

Along a winding direction of the electrode assembly 10, an end portion 111 of the positive electrode plate 11 and an end portion 121 of the separator 12 extend beyond an end portion 131 of the negative electrode plate 13. It should be noted that the winding direction is a direction in which a point on the electrode assembly 10 moves from the inside to the outside along the positive electrode plate 11, the separator 12, or the negative electrode plate 13. There may be two winding directions, namely clockwise and counterclockwise. This application takes counterclockwise winding as an example for illustration. The end portion refers to an end of which the winding of the positive electrode plate 11, the separator 12, or the negative electrode plate 13 terminates along the winding direction.

A first uncoated foil zone 112 is provided at a portion at which the positive electrode plate 11 extends beyond the negative electrode plate 13, where the first uncoated foil zone 112 refers to a region of which two sides of the current collector of the positive electrode plate 11 are provided with no active substance layer.

An outermost circle of the first straight segment 10a includes one layer of the first uncoated foil zone 112. An inner circle of the first straight segment 10a includes the positive electrode plate 11 close to the first uncoated foil zone 112 in the first direction X, and the inner circle of the first straight segment 10a further includes at least one layer of the separator 12 located between the first uncoated foil zone 112 and the positive electrode plate 11. Two sides of the separator 12 are the first uncoated foil zone 112 and the positive electrode plate 11. When the separator 12 shrinks under an impact force, the first uncoated foil zone 112 and the positive electrode plate 11 on the two sides of the shrinkage of the separator 12 have the same polarity, which reduces the risk of short-circuiting at the shrinkage of the separator 12 and improves the drop performance of the secondary battery 100.

Optionally, the inner circle of the first straight segment 10a includes two layers of the separators 12 located between the first uncoated foil zone 112 and the positive electrode plate 11, and the two layers of the separators 12 are used to improve the impact resistance of the first straight segment 10a.

Optionally, no active substance layer is provided on the outer surface of the positive electrode plate 11 close to the first uncoated foil zone 112 in the first direction X.

An end portion 1121 of the first uncoated foil zone 112 is located in the second straight segment 10c, and the end portion 1121 of the first uncoated foil zone 112 is the end portion 111 of the positive electrode plate 11.

The electrode assembly 10 is accommodated in the packaging bag 20. The packaging bag 20 is made of a packaging film through pit-puncturing, folding, and heat sealing, and is configured to package the electrode assembly 10.

The first bonding member 50 includes a first bonding surface 51 and a second bonding surface 52 that are arranged opposite each other along the first direction X. The first bonding surface 51 is bonded to the second straight segment 10c and covers at least part of the end portion 1121 of the first uncoated foil zone 112, to secure the position of the positive electrode plate 11, which reduces the risk of the electrode assembly 10 becoming loose and collapsing. Specifically, a portion of the first bonding surface 51 that is separated from the first uncoated foil zone 112 is bonded to the positive electrode plate 11 located in the second straight segment 10c. The second bonding surface 52 is bonded to the packaging bag 20 to secure the position of the electrode assembly 10 in the packaging bag 20, which helps to limit the relative sliding between the electrode assembly 10 and the packaging bag 20. On the one hand, it can reduce the risk of the separator 12 shrinking under the impact force. On the other hand, it can reduce the risk of the packaging bag 20 being damaged due to the movement of the electrode assembly 10 inside the packaging bag 20 when the secondary battery 100 is dropped, thereby improving the drop performance of the secondary battery 100. Moreover, compared with an existing method of providing two bonding members, where one bonding member is bonded to an end portion of the electrode plate and the other bonding member is bonded to the electrode assembly and the packaging bag, arrangement of the first bonding member 50 can reduce the space waste caused by providing multiple bonding members, thereby increasing the energy density of the secondary battery 100.

Optionally, the first bonding surface 51 further covers at least part of the end portion 121 of the separator 12 to confine the separator 12 in the winding direction, which reduces the risk of the separator 12 shrinking under the impact force.

Specifically, the first bonding member 50 includes a substrate layer and a pressure-sensitive adhesive layer and hot-melt adhesive layer that are connected to two sides of the substrate layer, where the first bonding surface 51 is formed on a side of the pressure-sensitive adhesive layer facing away from the substrate layer, and the second bonding surface 52 is formed on a side of the hot-melt adhesive layer facing away from the substrate layer. The substrate layer is made of a combination of one or more of PET (polyethylene glycol terephthalate, polyethylene glycol terephthalate), polyimide, polyester film, polyethylene film, non-woven fabric, foam, and acrylic. The pressure-sensitive adhesive layer is made of a combination of one or more of hydrogenated styrene block copolymer, hot-melt pressure-sensitive adhesive layer, modified hydrogenated styrene block copolymer, hydrogenated petroleum resin I, plasticizer, antioxidant, polyethylene oxide, acrylonitrile-styrene-butadiene copolymer, polyvinyl alcohol, polyethylene ether, polytetrafluoroethylene, polyhexafluoropropylene, styrene-butadiene copolymer, and polyvinylidene fluoride. The hot-melt adhesive layer is made of a combination of one or more of hydrogenated styrene block copolymer, modified hydrogenated styrene block copolymer, hydrogenated petroleum resin II, antioxidant, styrene, isoprene, polymethyl methacrylate, polyacrylic acid, polyacrylate, polyacrylonitrile, polyvinylpyrrolidone, polyvinyl acetate, ethylene-vinyl acetate copolymer, and polyimide.

Optionally, peel strength of the first bonding surface 51 is 0.6±0.1 N/m; and peel strength of the second bonding surface 52 is 0.9±0.1 N/m.

In the secondary battery 100, an outermost circle of the first straight segment 10a includes one layer of the first uncoated foil zone 112. An inner circle of the first straight segment 10a includes the positive electrode plate 11 close to the first uncoated foil zone 112 in the first direction X, and the inner circle of the first straight segment 10a further includes at least one layer of the separator 12 located between the first uncoated foil zone 112 and the positive electrode plate 11. Two sides of the separator 12 are the first uncoated foil zone 112 and the positive electrode plate 11. When the separator 12 shrinks under an impact force, the first uncoated foil zone 112 and the positive electrode plate 11 on the two sides of the shrinkage of the separator 12 have the same polarity, which reduces the risk of short-circuiting at the shrinkage of the separator 12 and improves the drop performance of the secondary battery 100. The first bonding surface 51 is bonded to the second straight segment 10c and covers at least part of the end portion 1121 of the first uncoated foil zone 112, to secure the position of the positive electrode plate 11, which reduces the risk of the electrode assembly 10 becoming loose and collapsing. The second bonding surface 52 is bonded to the packaging bag 20 to secure the position of the electrode assembly 10 in the packaging bag 20, which helps to limit the relative sliding between the electrode assembly 10 and the packaging bag 20. On the one hand, it can reduce the risk of the separator 12 shrinking under the impact force. On the other hand, it can reduce the risk of the packaging bag 20 being damaged due to the movement of the electrode assembly 10 in the packaging bag 20, thereby improving the drop performance of the secondary battery 100.

Still referring to FIG. 1, the secondary battery 100 further includes a positive electrode tab 30 and a negative electrode tab 40 that are located at the first straight segment 10a, where the positive electrode tab 30 is connected to the positive electrode plate 11 and extends out of the packaging bag 20, and the negative electrode tab 40 is connected to the negative electrode plate 13 and extends out of the packaging bag 20. Specifically, the positive electrode tab 30 extends from one side of the packaging bag 20 in a third direction Z, and the negative electrode tab 40 extends from one side of the packaging bag 20 in the third direction Z. The first direction X, the second direction Y, and the third direction Z are perpendicular to each other. Optionally, the third direction Z is a length direction of the secondary battery 100.

It should be noted that the positive electrode tab 30 and the negative electrode tab 40 extend from the same side of the packaging bag 20 in the third direction Z, or the positive electrode tab 30 and the negative electrode tab 40 extend from different sides of the packaging bag 20 in the third direction Z, respectively. This application takes the positive electrode tab 30 and the negative electrode tab 40 extending from the same side of the packaging bag 20 in the third direction Z as an example for illustration.

The positive electrode tab 30 and the negative electrode tab 40 are located at the first straight segment 10a, allowing the first straight segment 10a to fit with a shallow pit surface of the packaging bag 20 and the second straight segment 10c to fit with a deep pit surface of the packaging bag 20. Specifically, the packaging bag 20 includes a first connecting surface 21 and a second connecting surface 22 that are arranged opposite each other along the first direction X, where the first connecting surface 21 corresponds to the first straight segment 10a, and the second connecting surface 22 corresponds to the second straight segment 10c. A surface of the first connecting surface 21 facing away from the first straight segment 10a is used to connect with an external battery compartment. When the secondary battery 100 is dropped, the first connecting surface 21 experiences a greater impact force compared to the second connecting surface 22. On the one hand, a region in which the separator 12 is prone to shrinkage is located in the outermost circle of the first straight segment 10a, which helps to reduce the risk of short-circuiting at the shrinkage of the separator 12 and improves the drop performance of the secondary battery 100. On the other hand, it helps to reduce the impact force on the end portion 111 of the positive electrode plate 11, lowers the risk of tearing at the end portion 111 of the positive electrode plate 11, and improves the drop performance of the secondary battery 100.

Still referring to FIG. 1, in some embodiments, the end portion 131 of the negative electrode plate 13 is located in the second straight segment 10c, and the first uncoated foil zone 112 extends beyond the end portion 131 of the negative electrode plate 13 by one circle. It should be noted that one circle means starting from a point on the electrode assembly as the starting end, and going along the winding direction for one round until reaching another point as the ending end, with the ending end and the starting end located on the same side of the electrode assembly. Specifically, the first uncoated foil zone 112 extends from the second straight segment 10c, sequentially passing through the second bent segment 10d, the first straight segment 10a, and the first bent segment 10b, and then extends to the second straight segment 10c.

It can be understood that in other embodiments, the end portion 131 of the negative electrode plate 13 is located in the second bent segment 10d, where a length by which the first uncoated foil zone 112 extends beyond the end portion 131 of the negative electrode plate 13 is less than one circle; or the end portion 131 of the negative electrode plate 13 is located in the first bent segment 10b, where a length by which the first uncoated foil zone 112 extends beyond the end portion 131 of the negative electrode plate 13 is greater than one circle.

Still referring to FIG. 1, in some embodiments, the separator 12 is adhesive, and two surfaces of the separator 12 are bonded to the positive electrode plate 11 and the negative electrode plate 13 respectively, where a region of which the positive electrode plate 11 is bonded to the separator 12 may be an active substance layer of the positive electrode plate 11 or a region of the positive electrode plate 11 in which no active substance layer is provided, and a region of which the negative electrode plate 13 is bonded to the separator 12 may be an active substance layer of the negative electrode plate 13 or a region of the negative electrode plate 13 on which no active substance layer is provided. The positive electrode plate 11 and the negative electrode plate 13 are bonded to the two surfaces of the separator 12 respectively, which enhances the structural stability of the electrode assembly 10 and can reduce the risk of tearing at the portion of which the electrode assembly 10 is bonded to the first bonding surface 51 when the secondary battery 100 is dropped. Specifically, the portion of which the electrode assembly 10 is bonded to the first bonding surface 51 includes a portion of the first uncoated foil zone 112 and a portion of the positive electrode plate 11 located in the second straight segment 10c.

Optionally, no active substance layer is provided on an outer surface of the positive electrode plate 11 located in the second straight segment 10c.

It can be understood that when the inner circle of the first straight segment 10a includes two layers of the separators 12 located between the first uncoated foil zone 112 and the positive electrode plate 11, the two layers of the separators 12 are bonded to each other, so as to enhance the structural strength of the two layers of the separators 12 and reduce the risk of the separator 12 shrinking.

Still referring to FIG. 1, in some embodiments, peel strength between the separator 12 and the positive electrode plate 11 is 2 N/m to 12 N/m. When the peel strength between the separator 12 and the positive electrode plate 11 is too low (less than 2 N/m), it easily causes tearing at the portion at which the electrode assembly 10 is bonded to the first bonding surface 51; and when peel strength between the separator 12 and the positive electrode plate 11 is too high (greater than 12 N/m), it easily causes excessive binder to block the pores in the surfaces of the positive electrode plate 11 and the negative electrode plate 13, resulting in lithium plating, and also causes an increase in the thickness of the separator 12, affecting the energy density of the secondary battery 100. The peel strength between the separator 12 and the positive electrode plate 11 is defined to be from 2 N/m to 12 N/m, which reduces the risk of tearing at the portion of which the electrode assembly 10 is bonded to the first bonding surface 51 and the risk of lithium plating in the electrode assembly 10, and can also increase the energy density of the secondary battery 100.

Optionally, the peel strength between the separator 12 and the positive electrode plate 11 is 2 N/m, 3 N/m, 4 N/m, 5 N/m, 6 N/m, 7 N/m, 8 N/m, 9 N/m, 10 N/m, 11 N/m, 12 N/m, or any other value in a range of 2 N/m to 12 N/m.

Further, the peel strength between the separator 12 and the positive electrode plate 11 is 3 N/m to 12 N/m, which further reduces the risk of tearing at the portion at which the electrode assembly 10 is bonded to the first bonding surface 51 and the risk of lithium plating in the electrode assembly 10, and can also further increase the energy density of the secondary battery 100.

In some embodiments, peel strength between the separator 12 and the negative electrode plate 13 is 2 N/m to 12 N/m. When the peel strength between the separator 12 and the negative electrode plate 13 is too low (less than 2 N/m), it easily affects the structural stability of the electrode assembly 10; and when the peel strength between the separator 12 and the negative electrode plate 13 is too high (greater than 12 N/m), it easily causes excessive binder to block the pores in the surfaces of the positive electrode plate 11 and the negative electrode plate 13, resulting in lithium plating, and also causes an increase in the thickness of the separator 12, affecting the energy density of the secondary battery 100. The peel strength between the separator 12 and the negative electrode plate 13 is defined to be from 2 N/m to 12 N/m, which enhances the structural stability of the electrode assembly 10 and increases the energy density of the secondary battery 100, and can also reduce the risk of lithium plating in the electrode assembly 10.

Optionally, the peel strength between the separator 12 and the negative electrode plate 13 is 2 N/m, 3 N/m, 4 N/m, 5 N/m, 6 N/m, 7 N/m, 8 N/m, 9 N/m, 10 N/m, 11 N/m, 12 N/m, or any other value in the range of 2 N/m to 12 N/m.

Further, the peel strength between the separator 12 and the negative electrode plate 13 is 8 N/m to 12 N/m, which further enhances the structural stability of the electrode assembly 10 and increases the energy density of the secondary battery 100, and can also further reduce the risk of lithium plating in the electrode assembly 10.

It should be noted that in this application, a high-speed tensile tester is used to test the peel strength between the separator 12 and the positive electrode plate 11 or the negative electrode plate 13 according to GB/T 2792-2014 "Measurement of Peel Adhesion Properties for Adhesive Tapes". The test process is as follows: discharge the secondary battery to 3.0 V, next disassemble the secondary battery, and remove the separator and the electrode plate (positive electrode plate 11 or negative electrode plate 13) bonded to the separator as a whole, and wipe the electrolyte on the surface with dust-free paper; then cut the whole into strip samples of 10 mm×30 mm; along the length direction of the sample, adhere the surface of the electrode plate in the sample to a steel plate with double-sided tape (Nitto 5000NS), with an adhesion length of not less than 10 mm; and fix the steel plate at a position corresponding to the high-speed tensile tester, lift the other end of the electrode plate that is not adhered to the separator, and clamp the sample in the chuck, with the lifted portion of the sample forming an included angle of 180° with the steel plate in space; the chuck pulls the sample at a speed of 5±0.2 mm/s; and an average value of the force in the stable region is measured and recorded as the peel strength between the separator and the electrode plate, denoted as F, in units of N/m.

In some embodiments, the separator 12 is made adhesive by applying a binder to the surface of the separator 12. The binder is selected from a combination of one or more of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, and polyhexafluoropropylene. Different types of materials and/or mass ratios are selected to adjust the adhesive strength of the binder, so as to adjust the peel strength between the separator 12 and the negative electrode plate 13 and the peel strength between the separator 12 and the positive electrode plate 11.

Still referring to FIG. 1, in some embodiments, the first uncoated foil zone 112 further includes an end segment 1122 located in the second straight segment 10c, and an end of the end segment 1122 in the winding direction of the electrode assembly 10 is the end portion 1121 of the first uncoated foil zone 112. The first bonding surface 51 and the end segment 1122 have a first overlapping portion 511. Along the winding direction of the electrode assembly 10, a length H1 of the first overlapping portion 511 meets the following relation: 1 mm ≤ H1 ≤ 5 mm. When H1 is too short (less than 1 mm), it easily leads to weak connection strength between the first bonding surface 51 and the end segment 1122, thereby weakening the binding force of the packaging bag 20 on the electrode assembly 10; and when H1 is too long (greater than 5 mm), it easily leads to a larger space occupied by the first bonding member 50, resulting in space waste. Defining 1 mm ≤ H1 ≤ 5 mm enhances the connection strength between the first bonding surface 51 and the end segment 1122, thereby strengthening the binding force of the packaging bag 20 on the electrode assembly 10, and reducing the space occupied by the first bonding member 50 to increase the energy density of the secondary battery 100.

Optionally, H1 is 1 mm, 2 mm, 3 mm, 4 mm, 5 mm, or any other value in the range of 1 mm ≤ H1 ≤ 5 mm.

Further, 2 mm ≤ H1 ≤ 4 mm, which further enhances the connection strength between the first bonding surface 51 and the end segment 1122, thereby strengthening the binding force of the packaging bag 20 on the electrode assembly 10, and further reducing the space occupied by the first bonding member 50 to increase the energy density of the secondary battery 100.

In some embodiments, an area S1 of the first overlapping portion 511 and an area S2 of the first bonding surface 51 meet the following relation: 1% ≤ S1/S2 ≤ 10%. When S1/S2 is too small (less than 1%), it easily leads to weak connection strength between the first bonding surface 51 and the end segment 1122, thereby weakening the binding force of the packaging bag 20 on the electrode assembly 10; and when S1/S2 is too large (greater than 10%), it easily causes the electrode assembly 10 to become loose and collapse, and it easily concentrates the impact force generated by the first bonding member 50 on the end segment 1122 when the secondary battery 100 is dropped, thereby leading to tearing in the first uncoated foil zone 112. Defining 1% ≤ S1/S2 ≤ 10% enhances the connection strength between the first bonding surface 51 and the end segment 1122, thereby strengthening the binding force of the packaging bag 20 on the electrode assembly 10, reducing the risk of the electrode assembly 10 becoming loose and collapsing, also concentrating the impact force generated by the first bonding member 50 on the positive electrode plate 11 located in the second straight segment 10c when the secondary battery 100 is dropped, reducing the impact force on the end segment 1122, reducing the risk of tearing in the first uncoated foil zone 112, and improving the drop performance of the secondary battery 100.

Optionally, S1/S2 is 1%, 2%, 3%, 4%, 5%, 6%, 7%, 8%, 9%, 10%, or any other value in the range of 1% ≤ S1/S2 ≤ 10%.

Further, 5% ≤ S1/S2 ≤ 10%, which further enhances the connection strength between the first bonding surface 51 and the end segment 1122, thereby strengthening the binding force of the packaging bag 20 on the electrode assembly 10, further reducing the risk of the end segment 1122 becoming loose, further reducing the risk of tearing in the first uncoated foil zone 112, and improving the drop performance of the secondary battery 100.

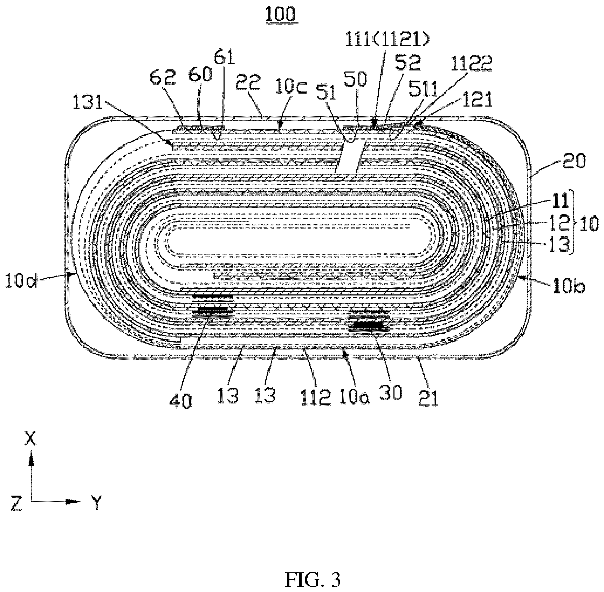

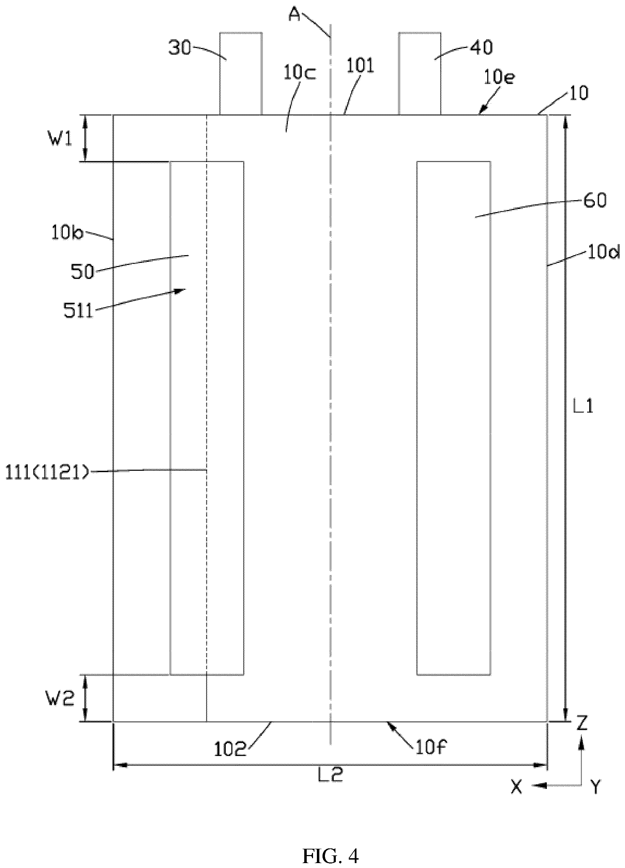

Referring to FIG. 3 and FIG. 4 together, in some embodiments, the secondary battery 100 further includes a second bonding member 60, where the second bonding member 60 includes a third bonding surface 61 and a fourth bonding surface 62 that are arranged opposite each other along the first direction X. The third bonding surface 61 is bonded to the second straight segment 10c, and the fourth bonding surface 62 is bonded to the packaging bag 20, which reduces the risk of the packaging bag 20 being damaged due to the movement of the electrode assembly 10 in the packaging bag 20 when the secondary battery 100 is dropped, thereby improving the drop performance of the secondary battery 100. The first bonding member 50 and the second bonding member 60 are spaced apart from each other along the second direction Y to distribute the impact force on two sides of the second straight segment 10c when the secondary battery 100 is dropped, which reduces the risk of tearing caused by stress concentration points in the second straight segment 10c, thereby improving the drop performance of the secondary battery 100.

In some embodiments, as viewed along the first direction X, the centerline of the second straight segment 10c in the second direction Y is a first centerline A, and the first bonding member 50 and the second bonding member 60 are symmetrically arranged with respect to the first centerline A, which ensures even force distribution on the first bonding member 50 and the second bonding member 60 when the secondary battery 100 is dropped, and further reduces the risk of tearing caused by stress concentration points in the second straight segment 10c, thereby improving the drop performance of the secondary battery 100.

Still referring to FIG. 3 and FIG. 4, in some embodiments, as viewed along the first direction X, the second straight segment 10c includes a first edge 101 and a second edge 102 that are arranged opposite each other in the third direction Z. Along the third direction Z, a distance W1 from one end of the first bonding member 50 close to the first edge 101 to the first edge 101 and a distance W2 from another end of the first bonding member 50 close to the second edge 102 to the second edge 102 meet the following relation: W1 = W2, which ensures even force distribution on the first edge 101 and the second edge 102 when the secondary battery 100 is dropped, and reduces the risk of tearing caused by stress concentration points on the first edge 101 or the second edge 102, thereby improving the drop performance of the secondary battery 100. Correspondingly, the second bonding member 60 and the first bonding member 50 are symmetrically arranged with respect to the first centerline A, and the second bonding member 60 and the first bonding member 50 have the same distances to the first edge 101 and the second edge 102.

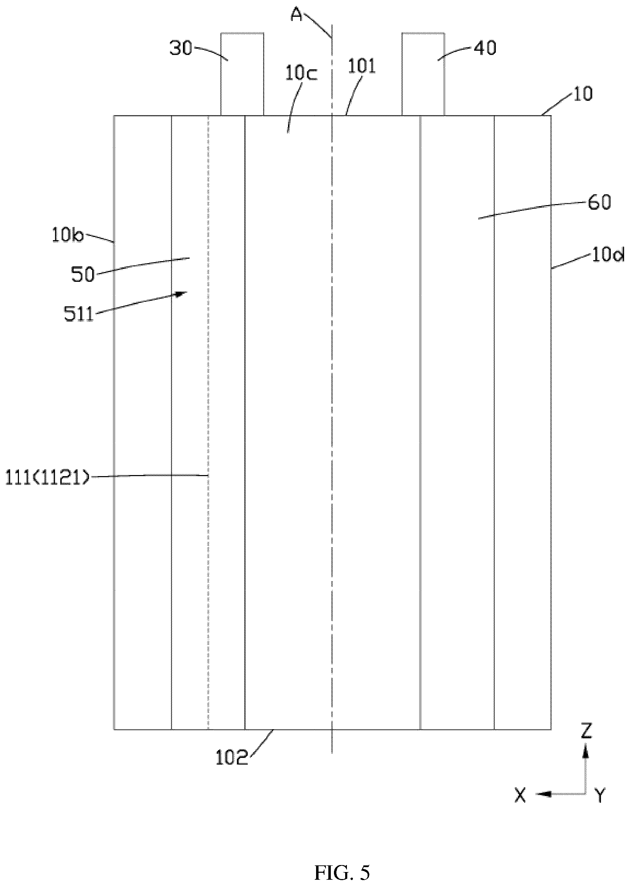

Referring to FIG. 5, optionally, W1 = W2 = 0, so that the first bonding member 50 completely covers the end portion 1121 of the first uncoated foil zone 112.

Referring to FIG. 4 again, in some embodiments, the electrode assembly 10 further includes a first end face 10e and a second end face 10f. The first end face 10e and the second end face 10f are located on two sides of the first straight segment 10a, the first bent segment 10b, the second straight segment 10c, and the second bent segment 10d in the third direction Z. The positive electrode tab 30 and the negative electrode tab 40 extend from the first end face 10e. Optionally, along the first direction X, a projection of the first edge 101 coincides with a projection of the first end face 10e, and a projection of the second edge 102 coincides with a projection of the second end face 10f.

In some embodiments, as viewed along the first direction X, a length L1 of the electrode assembly 10 in the third direction Z and a width L2 of the electrode assembly 10 in the second direction Y meet the following relation: L1/L2 ≥ 1, which facilitates the narrowing of the width of the second straight segment 10c, reduces the area of the separator 12 exposed from the first end face 10e and the second end face 10f, and reduces the risk of the separator 12 shrinking. Moreover, it also facilitates the narrowing of the width of the first bonding member 50 and/or the second bonding member 60, and reduces the risk of bubbles forming due to the larger width of the first bonding member 50 and/or the second bonding member 60.

Optionally, L1/L2 is 1, 2, 3, 4, 5, 6, 7, 8, 9, 10, or any other value in the range of L1/L2 ≥ 1.

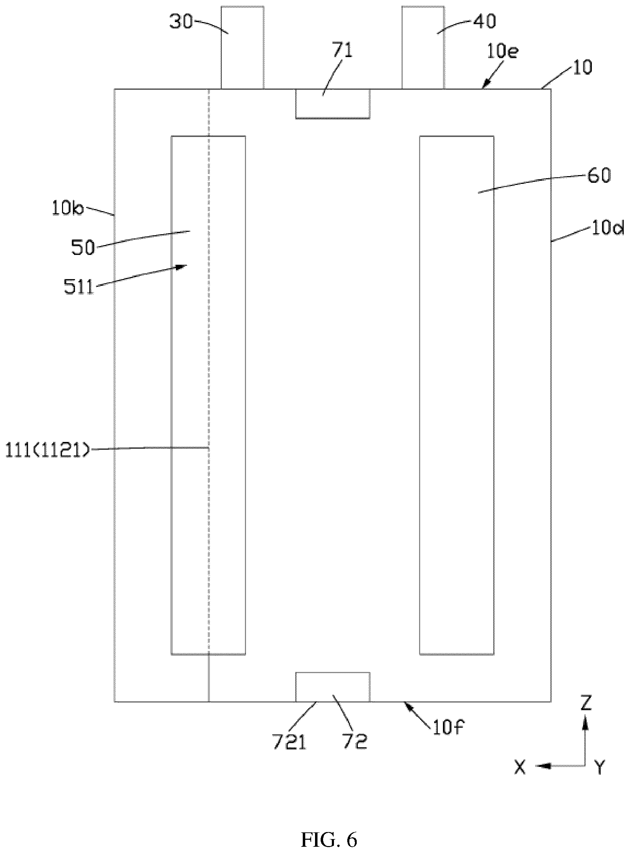

Referring to FIG. 6, in some embodiments, the secondary battery 100 further includes a first adhesive layer 71, where the first adhesive layer 71 is bonded to the first end face 10e and extends from the first end face 10e to the first straight segment 10a and the second straight segment 10c. The first adhesive layer 71 is configured to enhance the structural stability of the electrode assembly 10, and the first adhesive layer 71 is connected to an edge of the separator 12 located at the first end face 10e, which can reduce the risk of the separator 12 shrinking and improve the drop performance of the secondary battery 100.

Optionally, as viewed along the third direction Z, the first adhesive layer 71 is located between the positive electrode tab 30 and the negative electrode tab 40; or the first adhesive layer 71 is a split structure, and as viewed along the third direction Z, a first part of the first adhesive layer 71 is located on a side of the positive electrode tab 30 away from the negative electrode tab 40, a second part of the first adhesive layer 71 is located on a side of the negative electrode tab 40 away from the positive electrode tab 30, and a third part of the first adhesive layer 71 is located between the positive electrode tab 30 and the negative electrode tab 40.

In some embodiments, the secondary battery 100 further includes a second adhesive layer 72, where the second adhesive layer 72 is bonded to the second end face 10f and extends from the second end face 10f to the first straight segment 10a and the second straight segment 10c. The second adhesive layer 72 is configured to enhance the structural stability of the electrode assembly 10, and the second adhesive layer 72 is connected to an edge of the separator 12 located at the second end face 10f, which can reduce the risk of the separator 12 shrinking and improve the drop performance of the secondary battery 100.

Optionally, as viewed along the third direction Z, the second adhesive layer 72 is centered on the second end face 10f in the second direction Y; or the second adhesive layer 72 is a split structure, and as viewed along the third direction Z, multiple parts of the second adhesive layer 72 are spaced apart from each other in the second direction Y.

Further, the second adhesive layer 72 and the second end face 10f have a second overlapping portion 721, where an area S3 of the second overlapping portion 721 and an area S4 of the second end face 10f meet the following relation: 50% ≤ S3/S4 ≤ 95%, which further enhances the structural stability of the electrode assembly 10, further reduces the risk of the separator 12 shrinking, and improves the drop performance of the secondary battery 100.

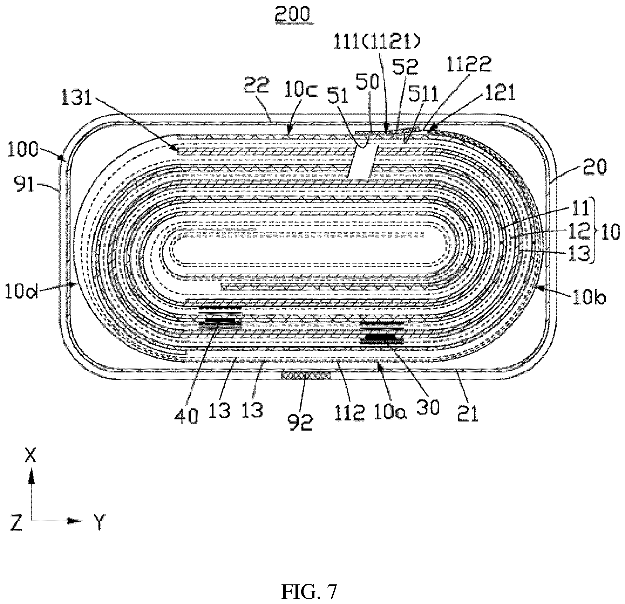

Referring to FIG. 7, an embodiment of this application further provides an electronic apparatus 200, where the electronic apparatus 200 includes a battery compartment 91, a third bonding member 92, and the secondary battery 100 according to any one of the foregoing embodiments. The secondary battery 100 is arranged in the battery compartment 91, and the third bonding member 92 is bonded to the battery compartment 91 and a region of the packaging bag 20 corresponding to the first straight segment 10a. Along the first direction X, the first straight segment 10a is closer to the third bonding member 92 than the second straight segment 10c.

In the foregoing electronic apparatus 200, when the secondary battery 100 is dropped, the region of the packaging bag 20 corresponding to the first straight segment 10a experiences a greater impact force compared to a region of the packaging bag 20 corresponding to the second straight segment 10c. On the one hand, a region in which the separator 12 is prone to shrinkage is located in the outermost circle of the first straight segment 10a, which helps to reduce the risk of short-circuiting at the shrinkage of the separator 12 and improves the drop performance of the secondary battery 100. On the other hand, it helps to reduce the impact force on the end portion 111 of the positive electrode plate 11, lowers the risk of tearing at the end portion 111 of the positive electrode plate 11, and improves the drop performance of the secondary battery 100.

Optionally, the electronic apparatus 200 may be a vehicle, a mobile phone, a portable device, a laptop computer, a ship, a spacecraft, an electric toy, an electric tool, or the like.

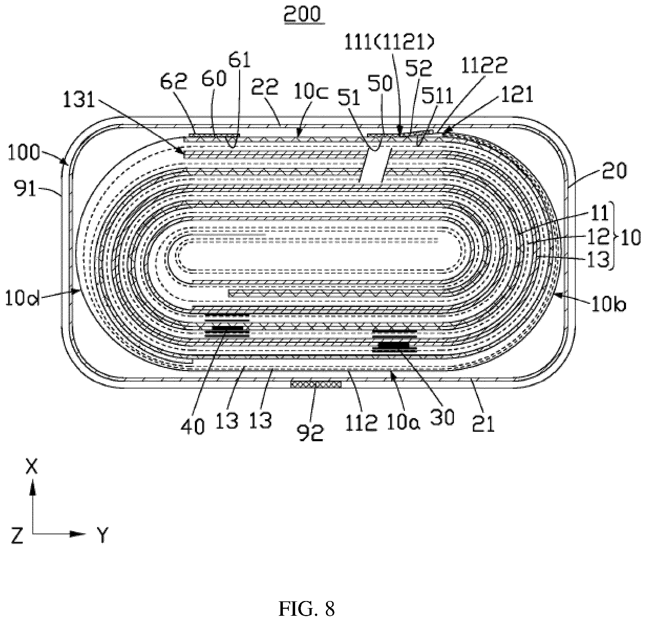

Referring to FIG. 8, in some embodiments, the first bonding member 50 and the second bonding member 60 are spaced apart from each other along the second direction Y to distribute the impact force on two sides of the second straight segment 10c when the secondary battery 100 is dropped, which reduces the risk of tearing caused by stress concentration points in the second straight segment 10c, thereby improving the drop performance of the secondary battery 100.

### Drop test

The lithium-ion battery was pre-treated at 25°C, and left standinging at room temperature for 60 minutes. The voltage of the lithium-ion battery was tested before the drop test. The lithium-ion battery was placed in a fixture and dropped freely from a height of 1.5 meters from the ground using a drop device in the following order: head-tail-head right corner-tail right corner-head left corner-tail left corner (angle: 45±15°), repeated for 6 rounds. After the drop test, the lithium-ion battery was left standing at room temperature for 24 hours. The voltage of the lithium-ion battery was measured and recorded, and the appearance of the lithium-ion battery was inspected and photographed before and after the test. Drop test passing criteria: no smoke, no leakage, voltage drop <30 m V. 100 battery cells were tested, the number of battery cells that passed the test was X, and a test pass rate was X/100.

### Electrode plate tear resistance test

For the battery cell after the drop test, the secondary battery was discharged to 3.0 V, and then the secondary battery was disassembled. The outermost electrode plate of the electrode assembly was observed. If there is no tearing, the secondary battery passed the test.

The following describes specific embodiments of the secondary battery 100 in the examples and comparative examples.

### Example 1

A secondary battery 100, the assembly process is as follows:
(1) Preparation of negative electrode plate: A negative electrode active material artificial graphite, conductive carbon black (Super P), and styrene-butadiene rubber (SBR) were mixed at a mass ratio of 96:1.5:2.5, in which deionized water was added as a solvent to obtain a slurry with a weight percentage of 50wt%, and the slurry was stirred to uniformity. Foaming adhesive was pre-applied to a part of the surface of a 6 µm thick negative electrode current collector copper foil, then the slurry was evenly applied on one surface of the copper foil, and the copper foil was heated to remove the foaming adhesive to expose a part of the surface of the copper foil, and then dried at 110°C to obtain a negative electrode plate with the negative electrode active material layer coated on one side. When a double-sided coated negative electrode plate was prepared, the above steps were repeated on the other surface of the negative electrode plate to obtain a negative electrode plate with the negative electrode active material layer coated on two sides. After that, the coated electrode plate was cold-pressed to a thickness of 105 µm, and the negative electrode tab was welded to the exposed copper foil, where the negative electrode tab was made of copper.
(2) Preparation of positive electrode plate: A positive electrode active material lithium cobalt oxide (LiCoO₂), conductive carbon black (Super P), and polyvinylidene fluoride (PVDF) were mixed at a mass ratio of 97.5:1.0:1.5, in which N-methylpyrrolidone (NMP) was added as a solvent to obtain a slurry with a solid content of 75wt%, and the slurry was stirred to uniformity. The slurry was evenly applied on one surface of the aluminum foil, and then the aluminum foil was dried at 90°C to obtain a positive electrode plate with the positive electrode active material coated on one side. When a double-sided coated positive electrode plate was prepared, the above coating steps were repeated on the other surface of the aluminum foil. After that, the coated electrode plate was cold-pressed to a thickness of 95 µm, a part of the positive electrode active material was removed through laser cleaning to expose a part of the surface of the aluminum foil, and the positive electrode tab was welded to the exposed aluminum foil, where the positive electrode tab was made of aluminum.
(3) Preparation of electrolyte: In a dry argon atmosphere, first ethylene carbonate (EC), ethyl methyl carbonate (EMC), and diethyl carbonate (DEC) were mixed at a mass ratio of EC:EMC:DEC=30:50:20 to prepare a base organic solvent, in which lithium salt lithium hexafluorophosphate (LiPF₆) was added and dissolved, and the mixture was mixed evenly to obtain an electrolyte with a lithium salt concentration of 1.15 mol/L.
(4) Preparation of separator: A 7-micron thick polyethylene porous polymer film was used as the separator.
(5) Preparation of electrode assembly 10: The positive electrode plate, separator, and negative electrode plate were stacked, and the resulting stacked structure was subjected to flat hot pressing at 80°C and a pressure of 1.5 MPa for 10 seconds to form an electrode assembly 10 for later use.
(6) Assembly of electrode assembly 10: A pit-punched aluminum-plastic film was placed in the assembly fixture with the pit surface facing up, the electrode assembly was placed in the pit, and an external force was applied to press it tightly. After that, another pit-punched aluminum-plastic film was used to cover the electrode assembly, with the pit surface facing down, and hot pressing was used to heat seal the periphery of the two aluminum-plastic films to obtain an assembled electrode group.
(7) Electrolyte injection and packaging: The electrolyte was injected into the assembled electrode assembly, followed by vacuum packaging, standing, hot pressing formation, shaping, and other processes, and a secondary battery was obtained.

**Table 1**

| (Except for the parameters involved in Table 1, all parameters of Comparative Examples 1 to 13 and Examples 1 to 7 are the same as those of Example 1.) | | | | | |
|---|---|---|---|---|---|
| No. | Whether first straight segment has uncoated foil zone | Peel strength of first bonding surface (N/m) | Peel strength of second bonding surface (N/m) | H1 (mm) | Drop test pass rate |
| Comparative Example 1 | No | 0.6 | 0.9 | 3 | 10% |
| Comparative Example 2 | Yes | 0 | 0.9 | 3 | 15% |
| Comparative Example 3 | Yes | 0.6 | 0 | 3 | 20% |
| Comparative Example 4 | Yes | 0.6 | 0.9 | 0 | 25% |
| Comparative Example 5 | No | 0.6 | 0 | 3 | 7% |
| Comparative Example 6 | No | 0.6 | 0.9 | 0 | 8% |
| Comparative Example 7 | Yes | 0 | 0 | 3 | 15% |
| Comparative Example 8 | Yes | 0 | 0.9 | 0 | 17% |
| Comparative Example 9 | Yes | 0.6 | 0 | 0 | 20% |
| Comparative Example 10 | No | 0 | 0 | 3 | 6% |
| Comparative Example 11 | No | 0 | 0.9 | 0 | 5% |
| Comparative Example 12 | Yes | 0 | 0 | 0 | 15% |
| Comparative Example 13 | None | 0 | 0 | 0 | 5% |
| Example 1 | Yes | 0.6 | 0.9 | 0.5 | 92% |
| Example 2 | Yes | 0.6 | 0.9 | 1 | 97% |
| Example 3 | Yes | 0.6 | 0.9 | 2 | 98% |
| Example 4 | Yes | 0.6 | 0.9 | 3 | 100% |
| Example 5 | Yes | 0.6 | 0.9 | 4 | 99% |
| Example 6 | Yes | 0.6 | 0.9 | 5 | 99% |
| Example 7 | Yes | 0.6 | 0.9 | 5.5 | 98% |

From the comparison of Comparative Examples 1 to 13 and Example 1, it can be learned that the arrangement of one layer of the first uncoated foil zone 112 in the outermost circle of the first straight segment 10a and at least one layer of the separator 12 located inside the first uncoated foil zone 112 and the arrangement of the first bonding member 50 can increase the drop test pass rate of the secondary battery 100.

From the comparison of Examples 1 to 7, it can be learned that defining 1 mm ≤ H1 ≤ 5 mm can improve the drop test pass rate of the secondary battery 100. It should be noted that compared with Examples 2 and 3, in Example 7, the drop test pass rate is similar, but the space occupied by the first bonding member 50 is larger, resulting in space waste, and the first bonding member 50 with a larger area is also prone to bubbles, affecting the thickness of the secondary battery 100 and causing appearance defects in the secondary battery 100.

**Table 2**

| (Example 34 is the same as Example 4, and except for the parameters involved in Table 2, all parameters of Examples 8 to 33 and 35 to 45 are the same as those of Example 34.) | | | | | | |
|---|---|---|---|---|---|---|
| No. | Peel strength between separator and positive electrode plate (N/m) | Peel strength between separator and negative electrode plate (N/m) | S1 /S2 | S3 /S4 | Drop test pass rate | Electrode plate tear resistance test pass rate |
| Example 8 | 1 | 10 | 7 | / | 45% | 96% |
| Example 9 | 2 | 10 | 7 | / | 81% | 95% |
| Example 10 | 3 | 10 | 7 | / | 85% | 96% |
| Example 11 | 4 | 10 | 7 | / | 89% | 97% |
| Example 12 | 5 | 10 | 7 | / | 93% | 96% |
| Example 13 | 6 | 10 | 7 | / | 97% | 96% |
| Example 14 | 8 | 10 | 7 | / | 100% | 99% |
| Example 15 | 10 | 10 | 7 | / | 98% | 98% |
| Example 16 | 12 | 10 | 7 | / | 99% | 98% |
| Example 17 | 13 | 10 | 7 | / | 100% | 100% |
| Example 18 | 8 | 1 | 7 | / | 45% | 96% |
| Example 19 | 8 | 2 | 7 | / | 81% | 95% |
| Example 20 | 8 | 3 | 7 | / | 85% | 96% |
| Example 21 | 8 | 4 | 7 | / | 89% | 97% |
| Example 22 | 8 | 5 | 7 | / | 93% | 96% |
| Example 23 | 8 | 6 | 7 | / | 94% | 96% |
| Example 24 | 8 | 8 | 7 | / | 97% | 96% |
| Example 25 | 8 | 10 | 7 | / | 100% | 99% |
| Example 26 | 8 | 12 | 7 | / | 98% | 98% |
| Example 27 | 8 | 13 | 7 | / | 100% | 100% |
| Example 28 | 8 | 10 | 0.01 | / | 92% | 50% |
| Example 29 | 8 | 10 | 0.03 | / | 93% | 60% |
| Example 30 | 8 | 10 | 0.5 | / | 94% | 65% |
| Example 31 | 8 | 10 | 1 | / | 95% | 68% |
| Example 32 | 8 | 10 | 3 | / | 96% | 70% |
| Example 33 | 8 | 10 | 5 | / | 97% | 94% |
| Example 34 | 8 | 10 | 7 | / | 100% | 99% |
| Example 35 | 8 | 10 | 9 | / | 98% | 98% |
| Example 36 | 8 | 10 | 10 | / | 100% | 100% |
| Example 37 | 8 | 10 | 11 | / | 99% | 69% |
| Example 38 | 8 | 10 | 7 | 45 | 86% | 98% |
| Example 39 | 8 | 10 | 7 | 50 | 91% | 98% |
| Example 40 | 8 | 10 | 7 | 60 | 92% | 98% |
| Example 41 | 8 | 10 | 7 | 70 | 93% | 98% |
| Example 42 | 8 | 10 | 7 | 80 | 95% | 98% |
| Example 43 | 8 | 10 | 7 | 90 | 96% | 98% |
| Example 44 | 8 | 10 | 7 | 95 | 98% | 99% |
| Example 45 | 8 | 10 | 7 | 100 | 100% | 100% |

From the comparison of Examples 8 to 17, it can be learned that defining the peel strength between the separator 12 and the positive electrode plate 11 to be from 2 N/m to 12 N/m can increase the drop test pass rate and the electrode plate tear resistance test pass rate of the secondary battery 100. It should be noted that in Example 17, it is easy to cause excessive binder to block the pores in the surfaces of the positive electrode plate 11 and the negative electrode plate 13, causing lithium plating and reducing the cycling performance of the secondary battery 100.

From the comparison of Examples 18 to 27, it can be learned that defining the peel strength between the separator 12 and the negative electrode plate 13 to be from 2 N/m to 12 N/m can increase the drop test pass rate and the electrode plate tear resistance test pass rate of the secondary battery 100. It should be noted that in Example 27, it is easy to cause excessive binder to block the pores in the surfaces of the positive electrode plate 11 and the negative electrode plate 13, causing lithium plating and reducing the cycling performance of the secondary battery 100.

From the comparison of Examples 28 to 37, it can be learned that defining 1% ≤ S1/S2 ≤ 10% can increase the drop test pass rate and the electrode plate tear resistance test pass rate of the secondary battery 100.

From the comparison of Examples 38 to 45, it can be learned that defining 50% ≤ S3/S4 ≤ 95% can increase the drop test pass rate and the electrode plate tear resistance test pass rate of the secondary battery 100. It should be noted that in Example 45, the difficulty of bonding the second adhesive layer 72 at the corners of the edge of the second end face 10f is increased.

In conclusion, in the secondary battery 100 and the electronic apparatus 200, the outermost circle of the first straight segment 10a includes one layer of the first uncoated foil zone 112, an inner circle of the first straight segment 10a includes the positive electrode plate 11 close to the first uncoated foil zone 112 in the first direction X, and the inner circle of the first straight segment 10a further includes at least one layer of the separator 12 located between the first uncoated foil zone 112 and the positive electrode plate 11. Two sides of the separator 12 are the first uncoated foil zone 112 and the positive electrode plate 11. When the separator 12 shrinks under an impact force, the first uncoated foil zone 112 and the positive electrode plate 11 on the two sides of the shrinkage of the separator 12 have the same polarity, which reduces the risk of short-circuiting at the shrinkage of the separator 12 and improves the drop performance of the secondary battery 100. The first bonding surface 51 is bonded to the second straight segment 10c and covers at least part of the end portion 1121 of the first uncoated foil zone 112, to secure the position of the positive electrode plate 11, which reduces the risk of the electrode assembly 10 becoming loose and collapsing. The second bonding surface 52 is bonded to the packaging bag 20 to secure the position of the electrode assembly 10 in the packaging bag 20, which helps to limit the relative sliding between the electrode assembly 10 and the packaging bag 20. On the one hand, it can reduce the risk of the separator 12 shrinking under the impact force. On the other hand, it can reduce the risk of the packaging bag 20 being damaged due to the movement of the electrode assembly 10 in the packaging bag 20, thereby improving the drop performance of the secondary battery 100.

In addition, persons skilled in the art can also make other changes within the spirit of this application. Certainly, these changes made according to the spirit of this application shall fall within the scope of this application.

## Claims

1. A secondary battery (100a), **characterized in that** the secondary battery (100a) comprises:
an electrode assembly (10) comprising a positive electrode plate (11), a separator (12), and a negative electrode plate (13) arranged in a winding manner; wherein the electrode assembly (10) comprises a first straight segment (10a), a first bent segment (10b), a second straight segment (10c), and a second bent segment connected in sequence; the first straight segment (10a) and the second straight segment (10c) are arranged opposite to each other along a first direction (X), the first bent segment (10b) and the second bent segment are arranged opposite each other along a second direction (Y), the first direction (X) is a thickness direction of the secondary battery (100a), the second direction (Y) is perpendicular to the first direction (X), an end portion (111, 1121) of the positive electrode plate (11) and an end portion of the separator (12) extend beyond an end portion of the negative electrode plate (13), and a first uncoated foil zone (112) is provided at a portion of the positive electrode plate (11) extending beyond the negative electrode plate (13), an outermost circle of the first straight segment (10a) comprises one layer of the first uncoated foil zone (112); an inner circle of the first straight segment (10a) comprises the positive electrode plate (11) closest to the first uncoated foil zone (112) in the first direction (X), and at least one layer of the separator (12) located between the first uncoated foil zone (112) and the positive electrode plate (11); and an end portion of the first uncoated foil zone (112) is located in the second straight segment (10c);
a packaging bag (20), wherein the electrode assembly (10) is accommodated in the packaging bag (20); and
a first bonding member (50), comprising a first bonding surface (51) and a second bonding surface (52) arranged opposite to each other along the first direction (X), wherein the first bonding surface (51) is bonded to the second straight segment (10c) and covers at least a part of the end portion of the first uncoated foil zone (112), and the second bonding surface (52) is bonded to the packaging bag (20).

2. The secondary battery (100a) according to claim 1, **characterized in that** the secondary battery (100a) further comprises a positive electrode tab (30) and a negative electrode tab (40) that are located at the first straight segment (10a), wherein the positive electrode tab (30) is connected to the positive electrode plate (11) and extends out of the packaging bag (20), and the negative electrode tab (40) is connected to the negative electrode plate (13) and extends out of the packaging bag (20).

3. The secondary battery (100a) according to claim 1 or 2, **characterized in that** the secondary battery (100a) satisfies at least one of the following conditions:
(1) the inner circle of the first straight segment (10a) comprises two layers of the separator (12) located between the first uncoated foil zone (112) and the positive electrode plate (11);
(2) the first bonding surface (51) further covers at least a part of the end portion of the separator (12).

4. The secondary battery (100a) according to any one of claims 1 to 3, **characterized in that** the separator (12) is an adhesive, and two surfaces of the separator (12) are bonded to the positive electrode plate (11) and the negative electrode plate (13) respectively, wherein a peel strength between the separator (12) and the positive electrode plate (11) is 2 N/m to 12 N/m, and a peel strength between the separator (12) and the negative electrode plate (13) is 2 N/m to 12 N/m.

5. The secondary battery (100a) according to claim 4, **characterized in that** the peel strength between the separator (12) and the positive electrode plate (11) is 3 N/m to 12 N/m, and the peel strength between the separator (12) and the negative electrode plate (13) is 8 N/m to 12 N/m.

6. The secondary battery (100a) according to any one of claims 1 to 5, **characterized in that** the first uncoated foil zone (112) further comprises an end segment located in the second straight segment (10c), the end segment is an end portion of the first uncoated foil zone (112) in a winding direction of the electrode assembly (10), the first bonding surface (51) and the end segment have a first overlapping portion (511), and a length H1 of the first overlapping portion (511) in the winding direction of the electrode assembly (10) meets the following relation: 1 mm ≤ H1 ≤ 5 mm.

7. The secondary battery (100a) according to claim 6, **characterized in that**, 2 mm ≤ H1 ≤ 4 mm.

8. The secondary battery (100a) according to claim 6 or 7, **characterized in that**, an area S1 of the first overlapping portion (511) and an area S2 of the first bonding surface (51) meet the following relation: 1% ≤ S1/S2 ≤ 10%.

9. The secondary battery (100a) according to claim 8, **characterized in that**, 5% ≤ S1/S2 ≤ 10%.

10. The secondary battery (100a) according to any one of claims 1 to 9, **characterized in that** the secondary battery (100a) further comprises a second bonding member (60), wherein the second bonding member (60) comprises a third bonding surface (61) and a fourth bonding surface (62) arranged opposite to each other along the first direction (X), the third bonding surface (61) is bonded to the second straight segment (10c), the fourth bonding surface (62) is bonded to the packaging bag (20), and the first bonding member (50) and the second bonding member (60) are spaced apart from each other along the second direction (Y);
as viewed along the first direction (X), a centerline of the second straight segment (10c) in the second direction (Y) is a first centerline (A), and the first bonding member (50) and the second bonding member (60) are symmetrically arranged with respect to the first centerline (A).

11. The secondary battery (100a) according to claim 10, **characterized in that** as viewed along the first direction (X), the second straight segment (10c) comprises a first edge (101) and a second edge (102) arranged opposite to each other in a third direction (Z); wherein the first direction (X), the second direction (Y), and the third direction (Z) are perpendicular to each other; and
along the third direction (Z), a distance W1 from one end of the first bonding member (50) closest to the first edge (101) to the first edge (101) and a distance W2 from another end of the first bonding member (50) closest to the second edge (102) to the second edge (102) meet the following relation: W1 = W2.

12. The secondary battery (100a) according to claim 2, **characterized in that** the electrode assembly (10) further comprises a first end face (10e) and a second end face **(10f), wherein** the first end face (10e) and the second end face (10f) are located on two sides of the first straight segment (10a), the first bent segment (10b), the second straight segment (10c), and the second bent segment in the third direction (Z), respectively; the first direction (X), the second direction (Y), and the third direction (Z) are perpendicular to each other; and
the positive electrode tab (30) and the negative electrode tab (40) extend out from the first end face (10e);
as viewed along the first direction (X), a length L1 of the electrode assembly (10) in the third direction (Z) and a width L2 of the electrode assembly (10) in the second direction (Y) meet the following relation: L1/L2 ≥ 1.

13. The secondary battery (100a) according to claim 12, **characterized in that** secondary battery (100a) satisfies at least one of the following conditions:
(1) the secondary battery (100a) further comprises a first adhesive layer (71), wherein the first adhesive layer (71) is bonded to the first end face (10e) and extends from the first end face (10e) to the first straight segment (10a) and the second straight segment (10c);
(2) the secondary battery (100a) further comprises a second adhesive layer (72), wherein the second adhesive layer (72) is bonded to the second end face (10f) and extends from the second end face (10f) to the first straight segment (10a) and the second straight segment (10c).

14. The secondary battery (100a) according to claim 13, **characterized in that** the second adhesive layer (72) and the second end face (10f) have a second overlapping portion, wherein an area S3 of the second overlapping portion and an area S4 of the second end face (10f) meet the following relation: 50% ≤ S3/S4 ≤ 95%.

15. An electronic apparatus (200), **characterized in that** the electronic apparatus (200) comprises a battery compartment (91) and a third bonding member (92), and further comprises the secondary battery (100a) according to any one of claims 1 to 14, wherein the secondary battery (100a) is disposed in the battery compartment (91), the third bonding member (92) is bonded to the battery compartment (91) and the packaging bag (20) at a region corresponding to the first straight segment (10a); and along the first direction (X), the first straight segment (10a) is closer to the third bonding member (92) than the second straight segment (10c).
